(19) **Europäisches Patentamt**
**European Patent Office**
**Office européen des brevets**

(11) **EP 3 736 090 A1**

(12) **EUROPEAN PATENT APPLICATION**

(43) Date of publication:
**11.11.2020 Bulletin 2020/46**

(51) Int Cl.:
***B25J 9/16*** *(2006.01)*

(21) Application number: **19173853.3**

(22) Date of filing: **10.05.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Franka Emika GmbH**
**80797 München (DE)**

(72) Inventors:
• **Spenninger, Andreas**
**85757 Karlsfeld (DE)**
• **Böhme, Niklas Frederik**
**80992 München (DE)**

(74) Representative: **Rösler Rasch van der Heide & Partner**
**Bodenseestraße 18**
**81241 München (DE)**

(54) **JOINT VELOCITY AND JOINT ACCELERATION ESTIMATION FOR ROBOTS**

(57) The invention relates to a robot (1) with an actuated robot manipulator, the robot manipulator comprising a number N of rigid body links $LNK_i$, wherein the links $LNK_i$ are connected via joints $JNT_i$, with $i=1,2,..., N$ and $N \geq 1$, wherein a first link $LNK_{i=1}$ is connected to a robot base (3) via a first joint $JNT_{i=1}$, wherein each of the joints $JNT_i$ comprises a joint angle measurement unit for measuring a joint angle $q_i$ and each of the links $LNK_i$ comprises a first translational acceleration sensor $S_i$ for measuring a translational acceleration $i_a$, each translational acceleration sensor $S_i$ being spaced apart from a rotation axis of joint $JNT_i$, wherein the robot further comprises: A first unit (5), wherein the first unit (5) is configured to determine an angular joint velocity $\dot{q}_i$ and an angular joint acceleration $\ddot{q}_i$ of each joint $JNT_i$ by applying a first kinematic relation connecting the measured translational acceleration $a_i$ at link $LNK_i$ with a position vector $X_{S,i}$ of the translational acceleration sensor $S_i$ and an angular velocity $\omega_i$ of link $LNK_i$ and an angular acceleration $\dot{\omega}_i$ of link $LNK_i$.

Fig. 2

EP 3 736 090 A1

**Description**

The invention relates to a robot with an actuated robot manipulator and with a first unit to determine an angular velocity and/or an angular acceleration between one or more links connected with joints of the manipulator, and the invention relates to a method for determining an angular velocity and/or an angular acceleration between one or more links connected with joints of the manipulator.

The sources of prior art mentioned below and additional sources are as follows:

[1] K. Kaneko and R. Horowitz, "Repetitive and adaptive control of robot manipulators with velocity estimation", IEEE Transactions on Robotics and Automation, vol. 13, no. 2, pp. 204-217, Apr 1997.

[2] G. Liu, A. Goldenberg, and Y. Zhang, "Precise slow motion control of a direct-drive robot arm with velocity estimation and friction compensation", Mechatronics, vol. 14, no. 7, pp. 821-834, Sep 2004.

[3] B. Siciliano and O. Khatib, Springer Handbook of Robotics. Springer- Verlag Berlin Heidelberg: Springer, 2008.

[4] M. A. Arteaga and R. Kelly, "Robot control without velocity measurements: new theory and experimental results", IEEE Transactions on Robotics and Automation, vol. 20, no. 2, pp. 297-308, April 2004.

[5] N. Dung, V. M. H. Ang, T. M. Lim, and S. Y. Lim, "Multi-rate operational space control of compliant motion in robotic manipulators", in 2009 IEEE International Conference on Systems, Man and Cybernetics, Oct 2009, pp. 3175-3180.

[6] S. Haddadin, A. De Luca, and A. Albu-Schaffer, "Robot collisions: A survey on detection, isolation, and identification", IEEE Transactions on Robotics, vol. 33, no. 6, pp. 1292-1312, 2017.

[7] J. Kirchhoff and O. von Stryk, "Velocity estimation for ultra lightweight tendon driven series elastic robots", IEEE Robotics and Automation Letters, vol. PP, no. 99, pp. 1-1, 2017.

[8] M. Geravand, F. Flacco, and A. De Luca, "Human-robot physical interaction and collaboration using an industrial robot with a closed control architecture", in 2013 IEEE International Conference on Robotics and Automation, May 2013, pp. 4000-4007.

[9] Y. X. Su, C. H. Zheng, D. Sun, and B. Y. Duan, "A simple nonlinear velocity estimator for high-performance motion control", IEEE Transactions on Industrial Electronics, vol. 52, no. 4, pp. 1161-1169, Aug 2005.

[10] W. Yu and X. Li, "PD control of robot with velocity estimation and uncertainties compensation", in Decision and Control, 2001. Proceedings of the 40th IEEE Conference on, vol. 2. IEEE, 2001, pp. 1162-1167.

[11] S. Morimoto, K. Kawamoto, M. Sanada, and Y. Takeda, "Sensorless control strategy for salient-pole PMSM based on extended EMF in rotating reference frame", IEEE Transactions on Industry Applications, vol. 38, no. 4, pp. 1054-1061, Jul 2002.

[12] A. De Luca and R. Mattone, "Sensorless robot collision detection and hybrid force/motion control", in Proceedings of the 2005 IEEE International Conference on Robotics and Automation, April 2005, pp. 999-1004.

[13] P.-C. Lin, H. Komsuoglu, and D. E. Koditschek, "Sensor data fusion for body state estimation in a hexapod robot with dynamical gaits", IEEE Transactions on Robotics, vol. 22, no. 5, pp. 932-943, Oct 2006.

[14] L. McLean, L. Chen, and W. Robertson, "A robotic joint sensor", Australasian Conference on Robotics and Automation, 2015.

[15] R. Jassemi-Zargani and D. Necsulescu, "Extended Kalman filter sensor fusion signals of nonlinear dynamic systems", DEFENCE RESEARCH ESTABLISHMENT OTTAWA (ONTARIO), Tech. Rep., 2001.

[16] J. H. Chen, S. Lee, and D. DeBra, "Gyroscope free strapdown inertial measurement unit by six linear accelerometers", Journal of Guidance, Control, and Dynamics, vol. 17, no. 2, pp. 286-290, Apr 1994.

[17] K. Parsa, J. Angeles, and A. K. Misra, "Rigid-body pose and twist estimation using an accelerometer array", Archive of Applied Mechanics, vol. 74, no. 3, pp. 223-236, Dec 2004. [Online]. Available: https://doi.org/10.1007/s00419-004-0345-6

[18] B. Munoz-Barron, J. R. Rivera-Guillen, R. A. Osornio-Rios, and R. J. Romero-Troncoso, "Sensor fusion for joint kinematic estimation in serial robots using encoder, accelerometer and gyroscope", Journal of Intelligent & Robotic Systems, vol. 78, no. 3, pp. 529-540, Jun 2015.

[19] W. Shang and S. Cong, "Motion control of parallel manipulators using acceleration feedback", IEEE Transactions on Control Systems Technology, vol. 22, no. 1, pp. 314-321, Jan 2014.

[20] J. Vorndamme, M. Schappler, and S. Haddadin, "Collision detection, isolation and identification for humanoids", in 2017 IEEE International Conference on Robotics and Automation (ICRA), May 2017, pp. 4754- 4761.

[21] M. W. Spong, "Modeling and control of elastic joint robots", Journal of dynamic systems, measurement, and control, vol. 109, no. 4, pp. 310-318, 1987.

[22] H. K. Khalil, Noninear systems, 1996, vol. 2, no. 5.

[23] A. De Luca, "Decoupling and feedback linearization of robots with mixed rigid/elastic joints", International Journal of Robust and Non- linear Control: IFAC-Affiliated Journal, vol. 8, no. 11, pp. 965-977, 1998.

[24] M. W. Spong, S. Hutchinson, M. Vidyasagar et al., Robot modeling and control. Wiley New York, 2006, vol. 3.

[25] B. N. Alsuwaidan, J. L. Crassidis, and Y. Cheng, "Generalized multiple-model adaptive estimation using an autocorrelation ap- proach", IEEE Transactions on Aerospace and Electronic Systems, vol. 47, no. 3, pp. 2138-2152, July 2011.

[26] E. Mazor, A. Averbuch, Y. Bar-Shalom, and J. Dayan, "Interacting multiple model methods in target tracking: a survey", IEEE Transactions on Aerospace and Electronic Systems, vol. 34, no. 1, pp. 103- 123, Jan 1998.

[27] Y. Zhang and X. R. Li, "Detection and diagnosis of sensor and actuator failures using IMM estimator", IEEE Transactions on Aerospace and Electronic Systems, vol. 34, no. 4, pp. 1293-1313, Oct 1998.

[28] J. P. Hespanha and A. S. Morse, "Stability of switched systems with average dwell-time", in Proceedings of the 38th IEEE Conference on Decision and Control (Cat. No.99CH36304), vol. 3, Dec 1999, pp. 2655-2660 vol.3.

[29] Small, Low Power, 3-Axis $\pm$16g Accelerometer, Analog Devices, 2009.

[30] R. E. Kalman, "A new approach to linear filtering and prediction problems", Transactions of the ASME-Journal of Basic Engineering, vol. 82, no. Series D, pp. 35-45, Mar 1960.

[31] S. J. Julier and J. K. Uhlmann, "A new extension of the Kalman filter to nonlinear systems", in Int. symp. aerospace/defense sensing, simul. and controls, vol. 3, no. 26. Orlando, FL, 1997, pp. 182-193.

[32] R. Kelly, "A simple set-point robot controller by using only position measurements", IFAC Proceedings Volumes, vol. 26, no. 2, pp. 527- 530, 1993.

[33] K.-J. Park, "Fourier-based optimal excitation trajectories for the dynamic identification of robots", Robotica, vol. 24, no. 5, pp. 625-633, 2006.

[34] F. Gustafsson, "Determining the initial states in forward-backward filtering", IEEE Transactions on signal processing, vol. 44, no. 4, pp. 988-992, 1996.

Various areas of rigid body and flexible joint manipulators such as motion control [1], [2], dynamic model identification [3], robust control [4], friction compensation [5], collision detection [6] and safety in general [7], [8] would benefit from highly accurate joint velocity and acceleration signals which, as of today is not available in serial chain articulated robots. In industrial robotics perfect control and therefore, perfect tracking is conventionally assumed. If the real joint acceleration is assumed to be equal to the desired ones, the solution is entirely dependent on the used controller and valid only vague. However, in particular this assumption is not valid in unpredictable situations such as collisions. The conventional approach to estimate joint velocity is to use tachometers or numerically differentiated position encoder signals. This process is well-known to be very sensitive against noise and/or quantization effects [9]. Optical encoders or resolvers and tachometers on the one hand are not only rather expensive but also noisy [10], [11]. For instance, numerical differentiation in practice introduces noise and/or an intrinsic one-step delay in a digital implementation for obtaining joint acceleration [12]. On the other hand, other sensors such as traditional Inertial Measurement Units (IMU) exist, which are typically used for air-born systems. Unfortunately they are not suitable for robots due to their large volume [13]. In [14], the body state of a Hexapod (rigid body) is estimated using leg pose and inertial sensors. However, the authors assumed that angular acceleration and velocity of a rigid body (separate links in manipulators) are unknown. In a similar work, Jassemi-Zargani et al. [15] used global geometrical information, i.e. the Jacobian of the manipulator, to estimate joint variables. This, however, significantly increases computational complexity and also prohibits decentralized computations on joint level. On the other hand, sensor installation misalignment may also pose a significant problem. Specifically, even minor installation errors lead to estimator performance degradation, which intensifies with time [16]. Parsa et al. [17] employed an array of redundant triaxial accelerometers in order to compensate sensor installation errors, making the setup computationally more demanding. The installation errors could indeed be eliminated by suitable sensor calibration before running the manipulator. Moreover, if the error dynamics are known (which is a reasonable assumption), it may be filtered out from the sensor output. However, the installation error of accelerometers alone does not justify equipping the manipulator with a larger number of sensors than required, although that might improve accuracy. Another similar work can be found in [18], where Munoz-Barron et al. propose an approach for feedback control of open-chain rigid body manipulators by measuring and fusing the information from optical encoders, accelerometers and gyroscopes.

It is the task of the invention to improve the quality of a measurement/estimation of an angular velocity and a measurement/estimation of an angular acceleration prevailing in the joints connecting links of a robotic manipulator.

On several occasions, in the following, a running index $i$ is used. The person skilled in the art will apprehend it as a statement to denote a respective element of a plurality of a finite set, while the number of elements in a finite set can also be "one". A left superscript variable or number or letter refers to the frame an item is denoted in, e.g. the term $^{i}e$ means, that vector e is denoted in a coordinate frame which is body-fixed to the $i$-th link $LNK_i$ or the $i$-th joint $JNT_i$.

A first aspect of the invention relates to a robot with an actuated robot manipulator, the robot manipulator comprising a number $N$ of rigid body links $LNK_i$, wherein the links $LNK_i$ are connected via joints $JNT_i$, with $i=1,2,...,N$ and $N \geq 1$, wherein a first link $LNK_{i=1}$ is connected to a robot base via a first joint $JNT_{i=1}$, wherein each of the joints $JNT_i$ comprises a joint angle measurement unit for measuring a joint angle $q_i$, wherein a first translational acceleration sensor $S_{i=i^*}$ with $i^* \in \{1,2,...,N\}$ for measuring a translational acceleration $a_{i=i^*}$ is attached to link $LNK_{i=i^*}$, the translational acceleration sensor $S_{i=i^*}$ being spaced apart from a rotation axis of the joint $JNT_{i=i^*}$, wherein the robot further comprises: A first unit, wherein the first unit is configured to determine an angular joint velocity $\dot{q}_{i=i^*}$ and/or an angular joint acceleration $\ddot{q}_{i=i^*}$ of joint $JNT_{i=i^*}$ by applying a first kinematic relation connecting the measured translational acceleration $a_{i=i^*}$ at link $LNK_{i=i^*}$ with a position vector $X_{S,i=i^*}$ of the translational acceleration sensor $S_{i=i^*}$ and an angular velocity $\omega_{i=i^*}$ of link $LNK_{i=i^*}$ and an angular acceleration $\dot{\omega}_{i=i^*}$ of link $LNK_{i=i^*}$.

According to an embodiment of the invention the first unit is configured to determine $\omega_{i=i^*}$ and $\dot{\omega}_{i=i^*}$ by solving the first kinematic relation and to determine $\dot{q}_{i=i^*}$ from $\omega_{i=i^*}$ and $\omega_{(i=i^*)-1}$ for $i=2,...,N$, and to determine $\ddot{q}_i$ from $\dot{\omega}_{i=i^*}$ and $\dot{\omega}_{(i=i^*)-1}$ for $i=2,...,N$.

According to an embodiment of the invention each of the links $LNK_{i<i^*}$ comprises a first translational acceleration sensor $S_{i<i^*}$ for measuring a translational acceleration $a_{i<i^*}$, each translational acceleration sensor $S_{i<i^*}$ being spaced apart from the rotation axis of joint $JNT_{i<i^*}$, wherein the first unit is configured to determine the angular joint velocity $\dot{q}_{i<i^*}$ and/or the angular joint acceleration $\ddot{q}_{i<i^*}$ of each of the joints $JNT_{i<i^*}$ by applying the first kinematic relation reiterated beginning with $JNT_{i=1}$ up to $JNT_{i=i^*}$

According to an embodiment of the invention the first unit is configured to determine $\omega_{i<i^*}$ and $\dot{\omega}_{i<i^*}$ by solving the first kinematic relation and to determine $\dot{q}_{i<i^*}$ from $\omega_{i<i^*}$ and $\omega_{(i<i^*)-1}$ for $i=2,...,N$, and to determine $\ddot{q}_i$ from $\dot{\omega}_{i<i^*}$ and $\dot{\omega}_{(i<i^*)-1}$ for $i=2,...,N$.

Preferably the position vector $X_{S,i=i^*}$ is denoted in the frame $i^*$ (i.e. a frame body-fixed to $LNK_{i=i^*}$) as $^{i=i^*}X_{S,i=i^*}$, also the angular velocity $\omega_{i=i^*}$ as $^{i=i^*}\omega_{i=i^*}$ and the angular acceleration $\dot{\omega}_{i=i^*}$ as $^{i=i^*}\dot{\omega}_{i=i^*}$.

Another aspect of the invention relates to a robot with an actuated robot manipulator, the robot manipulator comprising a number $N$ of rigid body links $LNK_i$, wherein the links $LNK_i$ are connected via joints $JNT_i$, with $i=1,2,...,N$ and $N \geq 1$, wherein a first link $LNK_{i=1}$ is connected to a robot base via a first joint $JNT_{i=1}$, wherein each of the joints $JNT_i$ comprises a joint angle measurement unit for measuring a joint angle $q_i$ and each of the links $LNK_i$ comprises a first translational acceleration sensor $S_i$ for measuring a translational acceleration $a_i$, each translational acceleration sensor $S_i$ being spaced apart from a rotation axis of joint $JNT_i$, wherein the robot further comprises: A first unit, wherein the first unit is configured to determine an angular joint velocity $\dot{q}_i$ and an angular joint acceleration $\ddot{q}_i$ of each joint $JNT_i$ by applying a first kinematic relation connecting the measured translational acceleration $a_i$ at link $LNK_i$ with a position vector $X_{S,i}$ of the translational acceleration sensor $S_i$ and an angular velocity $\omega_i$ of link $LNK_i$ and an angular acceleration $\dot{\omega}_i$ of link $LNK_i$.

According to an embodiment of the invention the first unit is configured to determine $\omega_i$ and $\dot{\omega}_i$ by solving the first kinematic relation and to determine $\dot{q}_i$ from $\omega_i$ and $\omega_{i-1}$ for $i=2,...,N$, and to determine $\ddot{q}_i$ from $\dot{\omega}_i$ and $\dot{\omega}_{i-1}$ for $i=2,...,N$.

According to another embodiment of the invention the first unit is configured to determine the position vector $X_{S,i}$ based on all $q_{i=1}$ to $q_i$ and based on a geometric model of the robot manipulator.

Preferably the position vector $X_{S,i}$ is denoted in the frame $i$ (i.e. a frame body-fixed to $LNK_i$) as $^iX_{S,i}$, also the angular velocity $\omega_i$ as $^i\omega_i$, and the angular acceleration $\dot{\omega}_i$ as $^i\dot{\omega}_i$, and $\dot{\omega}_{i-1}$ as $^{i-1}\dot{\omega}_{i-1}$ and $a_i$ as $^ia_i$. Other items analogue.

A joint angle $q_i$ is the angle between two links $LNK_i$ and $LNK_{i-1}$ for $i=2,...,N$ and between $LNK_{i=1}$ and a robot base, respectively. The Cartesian acceleration measurement $^ia_i \in \mathbb{R}^3$ of sensor $S_i$ installed on link $i$, i.e. $LNK_i$, adjacent and successor to link $i$-1, i.e. $LNK_{i-1}$, can be decomposed into:

$$^ia_i = {}^i\dot{\omega}_i \times {}^iX_{S,i} + {}^i\omega_i \times \left( {}^i\omega_i \times {}^iX_{S,i} \right) \qquad (1)$$

which denotes the first kinematic relation. The position of the sensor with respect to joint frame $i$ (i.e. a frame body-fixed to $LNK_i$ or $JNT_i$, respectively) is denoted as $^iX_{S,i}$. An offset $^ia_l$ denoting the linear acceleration caused by the joint frame translation is not existent / neglected in this case. To avoid that the cross products in (1) cause nonlinearities if the equation would be solved for ($^i\omega_i {}^i\omega_i$), the set of variables is defined, since a vector cross product also can be expressed as the product of a skew-symmetric matrix and a vector:

$$^ib_i = {}^i\left( \dot{\omega}^T \quad \omega_x\omega_y \quad \omega_x\omega_z \quad \omega_y\omega_z \quad \omega_x^2 \quad \omega_y^2 \quad \omega_z^2 \right)_i^T \qquad (2)$$

wherein superscript '$T$' serves to transpose a vector or matrix, i.e. a term $(\cdot)^T$ denotes the transposed of vector or matrix $(\cdot)$, and wherein:

$$ {}^i\dot{\omega}_i^{\ T} = {}^i\!\left( \dot{\omega}_x \quad \dot{\omega}_y \quad \dot{\omega}_z \right)_i \tag{3} $$

With these definitions (1) becomes linear and has the following form (cf. [14]), (in case the linear acceleration ${}^i a_l$, is not existent or neglected):

$$ {}^i a_i = {}^i\!\begin{vmatrix} 0 & -z & y \\ z & 0 & -x \\ -y & x & 0 \\ y & x & 0 \\ z & 0 & x \\ 0 & z & y \\ 0 & -y & -z \\ -x & 0 & -z \\ -x & -y & 0 \end{vmatrix}_i^T {}^i\!\begin{vmatrix} \dot{\omega}_x \\ \dot{\omega}_y \\ \dot{\omega}_z \\ \omega_x\,\omega_y \\ \omega_x\,\omega_z \\ \omega_y\,\omega_z \\ \omega_x^2 \\ \omega_y^2 \\ \omega_z^2 \end{vmatrix}_i = {}^i C_i\!\left({}^i X_{S,i}\right){}^i b_i \tag{4} $$

with:

$$ {}^i C_i = {}^i\!\begin{vmatrix} 0 & z & -y & y & z & 0 & 0 & -x & -x \\ -z & 0 & x & x & 0 & z & -y & 0 & -y \\ y & -x & 0 & 0 & x & y & -z & -z & 0 \end{vmatrix}_i \tag{5} $$

Equation (4) is to be solved for $\dot{\omega}_z$ and $\omega_z^2$, both contained in ${}^i b_i$. In (4) three known elements from the acceleration measurement ${}^i a_i$ exist. However, nine unknown variables of ${}^i b_i \in \mathbb{R}^9$ are on the right hand side. Assuming Denavit-Hartenberg (D-H) convention, the rotation axis of joint $i$, i.e. $JNT_i$, is its z-axis. Therefore, ${}^i\dot{\omega}_x$, ${}^i\dot{\omega}_y$, ${}^i\omega_x$, and ${}^i\omega_y$ are the same for two adjacent joints. This can simply be written as:

$$ \begin{pmatrix} 0 \\ 0 \\ \dot{q}_i \end{pmatrix} = {}^i\omega_i - {}^i\omega_{i-1}, \qquad \begin{pmatrix} 0 \\ 0 \\ \ddot{q}_i \end{pmatrix} = {}^i\dot{\omega}_i - {}^i\dot{\omega}_{i-1} \tag{6} $$

When (4) is preferably applied recursively from the first link $LNK_{i=1}$ to the last one of $LNK_i$, ${}^i\dot{\omega}_x$, ${}^i\dot{\omega}_y$, ${}^i\omega_x$, and ${}^i\omega_y$ are also known. By inserting these elements into ${}^i b_i$ of (4) it will turn into a linear system of equations with two variables, namely the joint acceleration $\ddot{q}_i$ and $\dot{q}_i^2$. Since the structure matrix determines the coefficients of this linear system of equations, its condition number is of significance. Obviously, ${}^i C_i({}^i X_{S,i})$ is a function of the sensor position and it can be shown that as long as the sensor is not placed on the rotation axis of $LNK_i$ (${}^i x_i \neq 0$ and/or ${}^i y_i \neq 0$), the matrix is well conditioned and ${}^i b_i$ can be computed. For ${}^i x_i = {}^i y_i = 0$, the accelerometer would not sense rotation caused by $JNT_i$.

Consider the special case of a manipulator with stationary base. In this case, $\dot{\omega}_0 = \omega_0 = 0$ and $\dot{\omega}_1 = (0\ 0\ \ddot{q}_1)^T$, $\omega_1 = (0\ 0\ \dot{q}_1)^T$. This simplifies (4) for the first joint to:

$$a_{i=1} = \begin{pmatrix} -y & x \\ x & -y \\ 0 & 0 \end{pmatrix} \begin{pmatrix} \ddot{q}_{i=1} \\ \dot{q}_{i=1}^2 \end{pmatrix} \quad (7)$$

Equation (7) can be solved to obtain $\ddot{q}_{i=1}$ and at least $|\dot{q}_{i=1}|$. Hence, a joint velocity and acceleration is estimated by incorporating accelerometers installed on the corresponding links together with the commonly available joint position measurement. In contrast to existing approaches in which the link angular variables are considered to be unknown, the problem is advantageously simplified by separating the angular velocity and acceleration in particular into a known and unknown part. The latter depends on information from other joints. It is thus an advantage of the invention that only one accelerometer per link is required for fixed-base robotic manipulators and that reliable and possibly decentralized estimation of elastic joint velocity and acceleration based on joint position and link acceleration sensing only is possible. Furthermore, simplicity of computations allowing to perform calculations on-board at high speed, wide estimation bandwidth (also thanks to preferred sensor fusion of different types, namely joint position and Cartesian acceleration sensors) and reduction in the number of required acceleration sensors comparing to existing approaches.

According to another embodiment of the invention the first unit is configured to determine the absolute value of an angular joint velocity as $|\dot{q}_i|$ and to determine a sign for $|\dot{q}_i|$ to obtain an angular joint velocity $\dot{q}_i$, by integrating $\ddot{q}_i$ and by determining the difference of the integrated $\ddot{q}_i$ to a) with $|\dot{q}_i|$ and to b) with $-|\dot{q}_i|$, and by choosing the sign according to the lowest difference out of a) and b).

Since $\omega_z$ exists solely in ${}^i b_i$ of (4), joint acceleration $\ddot{q}_i$ appears in (7) without nonlinearities. However, this is not the case for $\omega_z$ and subsequently $\dot{q}_i$, for which the correct sign has to be obtained. Solving (4) and (6) for $\dot{q}_i$ will return two solutions $\{\dot{q}_+, \dot{q}_- \in \mathbb{R} \,|\, \dot{q}_+ > 0, \dot{q}_- < 0\}$ if $\dot{q} \neq 0$. Typically, the absolute values of joint velocity with different signs are not equal ($|\dot{q}_+| \neq |\dot{q}_-|$). This condition can be written as

$$\dot{q}_+ = \alpha + \beta, \quad \dot{q}_- = -\alpha + \beta \quad (8)$$

in which $\{\alpha \in \mathbb{R}^+, \beta \in \mathbb{R} \,|\, |\alpha| \geq |\beta|\}$. The error caused by $\beta$ when the direction is computed incorrectly is large enough to be fixed. This error is defined as

$$e_1 = \left\| \int_0^t \ddot{q}\, dt - \dot{q}_+ \right\|_2, \quad e_2 = \left\| \int_0^t \ddot{q}\, dt - \dot{q}_- \right\|_2 \quad (9)$$

Here, the smaller error is assumed to correspond to the correct velocity estimate. If the absolute values of $|\dot{q}_+|$ and $|\dot{q}_-|$ are equal ($|\dot{q}_+| = |\dot{q}_-|$), the correct direction can only be chosen, if the integrator is accurate enough.

According to another embodiment of the invention the first unit is configured to determine the absolute value of angular joint velocity as $|\dot{q}_i|$ and to determine a sign for $|\dot{q}_i|$ to obtain an angular joint velocity $\dot{q}_i$ by determining the derivative of the measured joint angle $q_i$ and by adopting the sign of the derivative of the measured joint angle $q_i$ to the absolute value of angular joint velocity as $|\dot{q}_i|$.

Equation (1) as the first kinematic relation becomes the following, in case the linear acceleration ${}^i a_l$, is existent and considered:

$$ {}^i a_i = {}^i a_l + {}^i \dot{\omega}_i \times {}^i X_{S,i} + {}^i \omega_i \times \left( {}^i \omega_i \times {}^i X_{S,i} \right) \quad (10)$$

Hence equation (4) becomes consequently:

$$
{}^i a_i = {}^i \begin{vmatrix} 1 & 0 & 0 \\ 0 & 1 & 0 \\ 0 & 0 & 1 \\ 0 & -z & y \\ z & 0 & -x \\ -y & x & 0 \\ y & x & 0 \\ z & 0 & x \\ 0 & z & y \\ 0 & -y & -z \\ -x & 0 & -z \\ -x & -y & 0 \end{vmatrix}_i^T {}^i \begin{vmatrix} a_{l,x} \\ a_{l,y} \\ a_{l,z} \\ \dot{\omega}_x \\ \dot{\omega}_y \\ \dot{\omega}_z \\ \omega_x \omega_y \\ \omega_x \omega_z \\ \omega_y \omega_z \\ \omega_x^2 \\ \omega_y^2 \\ \omega_z^2 \end{vmatrix}_i = {}^i C_i \left( {}^i X_{S,i} \right) {}^i b_i \qquad (11)
$$

Wherein:

$$
{}^i C_i = {}^i \begin{vmatrix} 1 & 0 & 0 & 0 & z & -y & y & z & 0 & 0 & -x & -x \\ 0 & 1 & 0 & -z & 0 & x & x & 0 & z & -y & 0 & -y \\ 0 & 0 & 1 & y & -x & 0 & 0 & x & y & -z & -z & 0 \end{vmatrix}_i \qquad (12)
$$

and from (2):

$$
{}^i b_i = {}^i \left( a_l^T \quad \dot{\omega}^T \quad \omega_x \omega_y \quad \omega_x \omega_z \quad \omega_y \omega_z \quad \omega_x^2 \quad \omega_y^2 \quad \omega_z^2 \right)_i^T \qquad (13)
$$

and where ${}^i C_i({}^i X_{S,i})$ is the so called structure matrix (cf. [13]). The sensor location is denoted by ${}^i X_{S,i} = {}^i \left( x \quad y \quad z \right)_i^T$ in (11).

Hence, according to another embodiment of the invention at least one second translational acceleration sensor $S_{II}$ for measuring a translational acceleration $a_{II,i}$ is attached to at least one of the links $LNK_i$, wherein the first unit is configured to eliminate a linear acceleration affecting the robot base from the first kinematic relation by subtracting the measured acceleration $a_{II,i}$ of the at least one second translational acceleration sensor $S_{II}$ from the measured translational acceleration $a_i$ of a first translational acceleration sensor $S_i$ located on the same link $LNK_i$ which the at least one second translational acceleration sensor $S_{II}$ is attached to.

Taking into consideration ${}^i a_l$, being independent of the sensor location along $LNK_i$, it can be removed from $b_i$ by using an additional sensor. In other words, two sensors on the same link return the same ${}^i a_l$. Therefore, if the manipulator base is moving, one requires an additional sensor to eliminate the effect of the linear acceleration of the moving base, leading to

$$
{}^{i=1} a_{S,II,i=1} - {}^{i=1} a_{S,i=1} = \begin{vmatrix} -y_{S,II,i=1} + y_{S,i=1} & -x_{S,II,i=1} + x_{S,i=1} \\ x_{S,II,i=1} - x_{S,i=1} & -y_{S,II,i=1} + y_{S,i=1} \\ 0 & 0 \end{vmatrix} \begin{pmatrix} \ddot{q}_{i=1} \\ \dot{q}_{i=1}^2 \end{pmatrix} \qquad (14)
$$

Indexes $S_{II,i=1}$ and $S_{i=1}$ denote the second and first sensor installed on the first link $LNK_{i=1}$, respectively. Except for the first link $LNK_{i=1}$ of a manipulator with non-stationary base, one requires one acceleration sensor per link to determine $\dot{q}_{i=1}$ and $\ddot{q}_{i=1}$ only.

According to another embodiment of the invention the first unit is configured to eliminate a linear acceleration affecting the robot manipulator by applying a second kinematic relation between a virtual sensor $S^v$ located on each rotation axis of at least one of the joints $JNT_i$ and a first translational acceleration sensor $S_{i-1}$ located on the corresponding link $LNK_{i-1}$, for $i \in \{2,...,N\}$, wherein the second kinematic relation connects the virtually measured translational acceleration $^{i-1}a^v$ at the at least one of the joints $JNT_i$ with the physically measured translational acceleration at the corresponding link $LNK_{i-1}$ and a relative position vector $(X^v\text{-}X)$ between the virtual sensor $S^v$ and the first translational acceleration sensor $S_i$ and an angular velocity $^{i-1}\omega_{i-1}$ of the corresponding link $LNK_{i-1}$ and an angular acceleration $^{i-1}\dot{\omega}_{i-1}$ of the corresponding link $LNK_{i-1}$, for $i \in \{2,...,N\}$.

The relative position vector $(X^v\text{-}X)$ between the virtual sensor $S^v$ and the first translational acceleration sensor $S_i$ is preferably denoted as $(^{i-1}X^v\text{-}^{i-1}X)$, i.e. in the frame $i-1$ of $LNK_{i-1}$.

According to (1), an accelerometer on a robot link does not directly sense joint acceleration but a combination of rotational and translational accelerations, which have to be eliminated with the help of information from previous joints. As explained above, two sensors on the same link return the same $^{i}a_l$, , allowing to remove $^{i}a_l$ from $b_i$. For eliminating the linear acceleration $^{i}a_l$ (including gravity) of the i-th link frame from the accelerometer output, a virtual acceleration sensor (superscript v) located on at least one of the joints $JNT_i$ is introduced. Its output can be obtained with the help of data from the previous link, the second kinematic relation, as:

$$^{i-1}a^v = {}^{i-1}a \ + \ {}^{i-1}\dot{\omega}_{i-1} \times \left( {}^{i-1}X^v - {}^{i-1}X \right) \ + \ {}^{i-1}\omega_{i-1} \times \left( {}^{i-1}\omega_{i-1} \times \left( {}^{i-1}X^v - {}^{i-1}X \right) \right) \quad (15)$$

wherein $^{i-1}X^v$ is the position of $JNT_i$ (i.e., the new virtual sensor which is denoted as $S^v$) in the joint frame $i-1$, $^{i-1}X$ is the position of the real sensor located on $LNK_{i-1}$ and $^{i-1}a$ is its output. After $^{i}a^v$ is transformed into joint frame $i$ (4) can be simplified to:

$$^{i}a_{II} - {}^{i}a^v = {}^{i}\begin{vmatrix} 0 & -z_{II} & y_{II} \\ z_{II} & 0 & -x \\ -y_{II} & x_{II} & 0 \\ y_{II} & x_{II} & 0 \\ z_{II} & 0 & x_{II} \\ 0 & z_{II} & y_{II} \\ 0 & -y_{II} & -z_{II} \\ -x_{II} & 0 & -z_{II} \\ -x_{II} & -y_{II} & 0 \end{vmatrix}^{T} \quad {}^{i}\begin{vmatrix} \dot{\omega}_x \\ \dot{\omega}_y \\ \dot{\omega}_z \\ \omega_x \omega_y \\ \omega_x \omega_z \\ \omega_y \omega_z \\ \omega_x^{II} \\ \omega_y^{II} \\ \omega_z^{II} \end{vmatrix} = {}^{i}C'\left( {}^{i}X_{II} \right){}^{i}b' \quad (16)$$

Wherein $^{i}X_{II} = {}^{i}(x_{II} \, y_{II} \, z_{II})^T$ indicates the position of the i-th link acceleration sensor $S_{II}$. Since the linear acceleration of the moving frame $^{i}a_l$, is not a function of the sensor position, it can be removed from the structure matrix and $^{i}b$ by subtracting the accelerometers outputs on the same link. The new structure matrix in (16) is $^{i}C'(^{i}X)$ and the new variable vector becomes $^{i}b'$ Again, it can be shown that if the required information from the previous link is plugged into $^{i}b'$, the above structure matrix can be inverted and the system of equations is solvable for $^{i}\omega_z$ and $^{i}\dot{\omega}_z$ as long as the sensor is not located on the rotation axis of $JNT_i$. Once the components of angular velocity and acceleration on the z-axis are obtained, $\dot{q}_i$ and $\ddot{q}_i$ are given by (7). Regarding the required transmission of data from the previous link $^{i-1}\omega_{i-1}$ and $^{i-1}\dot{\omega}_{i-1}$ (for (7)) as well as $^{i-1}a^v$ (for (16)) are required.

In the two sensors per link set-up the need for the virtual sensor is eliminated by making use of an additional real sensor. Consequently, (16) can be modified into

$$^{i}a_{III} - {}^{i}a_{II} = \left( {}^{i}C'\left( {}^{i}X_{III} - {}^{i}X_{II} \right){}^{i}b' \right) \quad (17)$$

with two sensors $S_{II}$ and $S_{III}$, which are located on at least one of the links $LNK_i$. In order to avoid redundancy, the sensors have to be located in positions with different radii from the rotation axis $z$. Note that due to the sensor errors redundancy can improve the estimation accuracy. The information to be transmitted from the previous link is reduced to $^{i-1}\omega_{i-1}$ and $^{i-1}\dot{\omega}_{i-1}$ for (6).

According to another embodiment of the invention the first unit is configured to eliminate a gravity influence from the measured translational acceleration $a_j$ of a first translational acceleration sensor $S_j$ by subtracting a gravity vector, wherein the direction of the gravity vector relative to an orientation of the first translational acceleration sensor $S_j$ is determined by joint all angles from $q_{i=1}$ up to $q_i$ of $LNK_i$ to which the translational acceleration $a_j$ is attached to.

The required number of acceleration sensors at each robot link allowing to solve (2) for $^i b_i$ depends on the available information from the respective previous robot links in the serial kinematics chain. Three meaningful sensor setups on the robot link can be defined for calculating $^i b_i$: One, two and four sensors per robot link. In turn, $^i b_i$ is required for estimating the joint velocity and acceleration. Besides the number of acceleration sensors together with the resulting estimation algorithm, the required computational effort and the necessary data transmission between the joints are to be considered.

According to another embodiment of the invention four of the first translational acceleration sensors $S_j$ for measuring a translational acceleration $a_j$ are attached to each of the links $LNK_i$.

In this setup, the velocity $\dot{q}_i$ and acceleration $\ddot{q}_i$ of $JNT_i$ can be directly computed from the acceleration measurements $a_j$ of accelerometers $S_j$, $2 \leq j \leq 5$. Making inter-joint data transfer unnecessary. Given that $^i b_i \in \mathbb{R}^{12}$ in (13), the structure matrix is square (each sensor adds three rows to the matrix). With

$$\begin{pmatrix} ^i a_{II} \\ ^i a_{III} \\ ^i a_{IV} \\ ^i a_V \end{pmatrix}_i = \begin{pmatrix} ^i C\left(^i X_{II}\right) \\ ^i C\left(^i X_{III}\right) \\ ^i C\left(^i X_{IV}\right) \\ ^i C\left(^i X_V\right) \end{pmatrix}_i {}^i b_i \qquad (18)$$

wherein $^i b_i$ (including the linear accelerations $^i a_i$) can be computed for robot arm as long as the overall structure matrix has full rank. Since the structure matrix is a function of accelerometer location only, it has full rank only if the sensors are located on the vertices of a spatial tetrahedron with non-zero volume [13]. In this case the overall structure matrix in (18) is invertible and $^i b_i$ can be obtained.

According to another embodiment of the invention the robot further comprises: A second unit, wherein the second unit is configured to determine and to provide filtered values $\hat{q}_i$ of the joint angle $q_i$ and/or filtered values $\hat{\dot{q}}_i$ of angular joint velocity $\dot{q}_i$ and/ or filtered values $\hat{\ddot{q}}_i$ of angular joint acceleration $\ddot{q}_i$ by applying a filter model to the joint angle $q_i$ and the angular joint velocity $\dot{q}_i$ and angular joint acceleration $\ddot{q}_i$.

In the ideal case without noise or sensor bias distorting the acceleration measurements, $^i b_i$ can simply be obtained by inverting the structure matrix and multiplying it to the sensor output. However, even in the ideal case, $^i b_i$ itself is not of direct interest, as it contains only angular acceleration and squared values or products of angular velocities, not joint acceleration $\ddot{q}_i$ and velocity $\dot{q}_i$. For additional fusion with the available joint position measurement $q_i$, considering the filtering of noise as well as estimating the unknown sensor bias (or slow drifts), filtering is taken into account based on two different kinematic models. Note that the subsequently mentioned filters could be one of various schemes such as Kalman filters, or extended Kalman filters, or unscented Kalman filters.

In the following sections regarding "filtering", any index $i$ or related indexes are not shown for the sake of simplicity. Indexes as $i$ can be freely applied depending on the scope, in particular the number of measurements and degrees of freedom, the filter models are applied.

Linear Filtering:

In the linear filtering approach, joint position, velocity, acceleration and jerk are the states of the dynamic model of the filter and it has the form

$$\frac{d}{dt} \begin{pmatrix} q \\ \dot{q} \\ \ddot{q} \\ \dddot{q} \end{pmatrix} = \begin{pmatrix} 0 & 1 & 0 & 0 \\ 0 & 0 & 1 & 0 \\ 0 & 0 & 0 & 1 \\ 0 & 0 & 0 & 0 \end{pmatrix} \begin{pmatrix} q \\ \dot{q} \\ \ddot{q} \\ \dddot{q} \end{pmatrix} + w, \qquad y = \begin{pmatrix} q \\ \dot{q} \\ \ddot{q} \end{pmatrix} + v \qquad (19)$$

Here, $\dddot{q}$ denotes jerk with *w* and *v* being process and measurement noise with known covariance matrices, respectively. Given the dynamic model of the joint acceleration is not at hand, its time derivative with zero dynamics are preferably plugged to the Kalman filter dynamic model in order to reduce the process noise. Obviously, the constant jerk in general is an inherently false assumption. However, it introduces less process noise than constant acceleration assumption and improves acceleration estimation. According to (19), joint position, velocity and acceleration are measured. For calculation of $\dot{q}$ and $\ddot{q}$. Once these two variables are computed, they may be fed to the filter. The integrated $\ddot{q}$ is preferably fed back to the calculator in order to compute the correct sign of $\dot{q}$.

Multiple Linear Model Filtering:

Another preferred version of the filter simultaneously estimates the direction of joint velocity as well. For this, two filters are considered each being similar to the previous one under section "linear filtering" with the same dynamic models. Each one is fed either by $q_+$ + or $q_-$. In the end, a master filter estimates the correct direction of joint velocity $\dot{q}_i$ and switches between the two filters. Various algorithms for switching between the two models were proposed [25]-[27]. In [25] for instance, a likelihood function assigns weights to each filter (which has a unique model) based on the so called measurement-minus-estimate residuals. The estimated state $x_k$ at epoch *k* is then the weighted sum of outputs of all filters. The exponential stability of this linear system is guaranteed as long as the switching process is so-called slow-on-the-average [28]. Since $a_i$ is not directly fed into the filter of the dynamic models presented so far, there is no data fusion or direct noise filtering for this quantity yet. In the next subsection the accelerometer output is inserted into the measurement function of the estimator. Given that the measurement function becomes nonlinear in this case, one needs a nonlinear filtering method. Again, a specific choice is not of interest here.

Nonlinear Filtering:

The third preferred model uses the Cartesian acceleration measurements for the filter error correction. This allows to extend the dynamic model by estimates of the sensor bias and to estimate $\dot{q}_i$ together with its correct sign. This leads to the nonlinear dynamic model

$$\frac{d}{dt}\begin{pmatrix} q \\ \dot{q} \\ \ddot{q} \\ \dddot{q} \end{pmatrix} = \begin{pmatrix} 0 & 1 & 0 & 0 \\ 0 & 0 & 1 & 0 \\ 0 & 0 & 0 & 1 \\ 0 & 0 & 0 & 0 \end{pmatrix}\begin{pmatrix} q \\ \dot{q} \\ \ddot{q} \\ \dddot{q} \end{pmatrix} + w, \quad y = \begin{pmatrix} q \\ a(q,\dot{q},\ddot{q}) \end{pmatrix} + v \qquad (20)$$

In (20) the measurement noise v includes both accelerometer noise and bias, while w denotes process noise. The second output *a* of the system is computed according to (10), and b is created from the states of the dynamic system. Given the number and positions of accelerometers, the structure matrix will also be computed. Preferably *a* is determined recursively from the first sensor installed on the first link $LNK_{i=1}$ to the last sensor located at the end-effector, i.e. the last one of $LNK_i$. One has to make sure that the correct pieces of information are sent between two adjacent links based on the number of sensors per link. Since the measurement function is nonlinear, an Extended Kalman Filter (EKF) is preferably used for data fusion and filtering. In order to implement an EKF, (20) needs to be discretized and the exact discrete-time representation of the dynamic model (which is linear) is used. The nonlinearity in the EKF comes from the output function in which the Cartesian acceleration $a(q,\dot{q},\ddot{q})$ is obtained nonlinearly from the states using (1) [/respectively (10)] and (6). Since the output function y of (20) is an algebraic equation, discretization does not affect it.

Another aspect of the invention relates to a method for determining an angular joint velocity $\dot{q}_{i=i^*}$ and/or an angular joint acceleration $\ddot{q}_{i=i^*}$ for a robot with an actuated robot manipulator, the robot manipulator comprising a number *N* of rigid body links $LNK_i$, wherein the links $LNK_i$ are connected via the joints $JNT_i$, with *i*=1,2,...,*N* and $N \geq 1$, wherein a first link $LNK_{i=1}$ is connected to a robot base via a first joint $JNT_{i=1}$, wherein each of the joints $JNT_i$ comprises a joint angle measurement unit measuring a joint angle $q_i$, wherein a first translational acceleration sensor $S_{i=i^*}$ with $i^* \in \{1,2,...,N\}$ is measuring a translational acceleration $a_{i=i^*}$ and is attached to link $LNK_{i=i^*}$, the translational acceleration sensor $S_{i=i^*}$ being spaced apart from a rotation axis of the joint $JNT_{i=i^*}$, wherein an angular joint velocity $\dot{q}_{i=i^*}$ and/or an angular joint acceleration $\ddot{q}_{i=i^*}$ of joint $JNT_{i=i^*}$ is determined by a first unit by applying a first kinematic relation connecting the measured translational acceleration $a_{i=i^*}$ at link $LNK_{i=i^*}$ with a position vector $X_{S,i=i^*}$ of the translational acceleration sensor $S_{i=i^*}$ and an angular velocity $\omega_{i=i^*}$ of link $LNK_{i=i^*}$ and an angular acceleration $\omega_{i=i^*}$ of link $LNK_{i=i^*}$.

Preferably the position vector $X_{S,i=i^*}$ is denoted in the frame *i** (i.e. a frame body-fixed to $LNK_{i=i^*}$) as $^{i=i^*}X_{S,i=i^*}$, also the angular velocity $\omega_{i=i^*}$ as $^{i=i^*}\omega_{i=i^*}$ and the angular acceleration $\omega_{i=i^*}$ as $^{i=i^*}\omega_{i=i^*}$.

Another aspect of the invention relates to a method for determining an angular joint velocity $\dot{q}_{i=i*}$ and/or an angular joint acceleration $\ddot{q}_{i=i*}$ for a robot with an actuated robot manipulator, the robot manipulator comprising a number $N$ of rigid body links $LNK_i$, wherein the links $LNK_i$ are connected via joints $JNT_i$, with $i=1,2,...,N$ and $N \geq 1$, wherein a first link $LNK_{i=1}$ is connected to a robot base via a first joint $JNT_{i=1}$, wherein each of the joints $JNT_i$ comprises a joint angle measurement unit measuring a joint angle $q_i$ and each of the links $LNK_i$ comprises a first translational acceleration sensor $S_i$ measuring a translational acceleration $a_i$, each translational acceleration sensor $S_i$ being spaced apart from a rotation axis of joint $JNT_i$, wherein an angular joint velocity $\dot{q}_i$ and an angular joint acceleration $\ddot{q}_i$ of each joint $JNT_i$ is determined by a first unit by applying a first kinematic relation connecting the measured translational acceleration $a_i$ at link $LNK_i$ with a position vector $X_{S,i}$ of the translational acceleration sensor $S_i$ and an angular velocity $\omega_i$ of link $LNK_i$ and an angular acceleration $\dot{\omega}_i$ of link $LNK_i$ .

According to another embodiment of the invention $\omega_i$ and $\dot{\omega}_i$ are determined by the first unit by solving the first kinematic relation and $\dot{q}_i$ is determined from $\omega_i$ and $\omega_{i-1}$ for $i=2,...,N$, and $\ddot{q}_i$ is determined from $\dot{\omega}_i$ and $\dot{\omega}_{i-1}$ for $i=2,...,N$.

Preferably the position vector $X_{S,i}$ is denoted in the frame $i$ (i.e. a frame body-fixed to $LNK_i$) as ${}^iX_{S,i}$, also the angular velocity $\omega_i$ as ${}^i\omega_i$ and the angular acceleration $\dot{\omega}_i$ as ${}^i\dot{\omega}_i$ and $\dot{\omega}_{i-1}$ as ${}^i\dot{\omega}_{i-1}$.

Another aspect of the invention relates to a computer system with a data processing unit, wherein the data processing unit is designed and set up to carry out the method as explained above and below.

Another aspect of the invention relates to a digital data storage with electronically readable control signals, wherein the control signals can coaction with a programmable computer system, so that a method as explained above and below is carried out.

Another aspect of the invention relates to a computer program product comprising a program code stored in a machine-readable medium for executing a method the explained above and below, if the program code is executed on a computer system.

Another aspect of the invention relates to a computer program with program codes for executing a method as explained above and below, if the computer program runs on a computer system.

According to another aspect of the invention the angular joint velocity $\dot{q}_i$ and/or the angular joint acceleration $\ddot{q}_i$ of each joint $JNT_i$ is used for collision detection.

Consider the reduced flexible joint dynamics, as shown in [21]:

$$M(q)\ddot{q}+C(q,\dot{q})\dot{q}+g(q)=\tau_J+\tau_{ext}+D_J(\dot{\theta}-\dot{q})$$
$$B\ddot{\theta}+D_J(\dot{\theta}-\dot{q})=\tau_m-\tau_J \qquad (21)$$
$$\tau_J=K_J(\theta-q)$$

in which $q\in\mathbb{R}^n$ denotes the generalized coordinates, $\dot{q}\in\mathbb{R}^n$ the links side joint velocity, $\ddot{q}\in\mathbb{R}^n$ the link side joint acceleration, $\theta\in\mathbb{R}^n$ the motor position, $M\in\mathbb{R}^{n\times n}$ the symmetric and positive definite inertia matrix, $C(q,\dot{q})\dot{q}\in\mathbb{R}^n$ the centripetal and Coriolis vector, $g\in\mathbb{R}^n$ the gravity vector, $\tau_J\in\mathbb{R}^n$ the elastic joint torque, $\tau_{ext}\in\mathbb{R}^n$ the external torque caused by unforeseen collision, $\tau_m\in\mathbb{R}^n$ the active motor torque, $D_J=diag\{D_{J,i}\}\in\mathbb{R}^{n\times n}$ the diagonal positive semidefinite joint damping matrix, $K_J=diag\{K_{J,i}\}\in\mathbb{R}^{n\times n}$ the diagonal positive definite joint stiffness matrix, and $B_J=diag\{B_{J,i}\}\in\mathbb{R}^{n\times n}$ the diagonal positive definite motor inertia matrix.

(i) Given an accurate dynamic model of the robot, measuring the motor torque, link and motor side joint position and links Cartesian acceleration and estimating the joint velocity and acceleration, the external torque can be calculated algebraically from (21). For difference/peculiarities in measurement and/or estimation of joint quantity, please refer to [6] where the differences between rigid body, flexible joint and variable stiffness actuation are explained.

The goal of feedback linearization of nonlinear systems is first and foremost to cancel the nonlinear parts and secondly, stabilize and control the controllable linear part of the system. Therefore, if existing, the state feedback control is preferably of the form [22]:

$$u(x)=\alpha(x)+\beta(x)v \qquad (22)$$

with x being the system states, $\alpha(\cdot)$ the system nonlinearities, $\beta(\cdot)$ the linear and controllable part of the system and v the stabilizing linear state feedback control. Given the principles of the feedback linearization, to find the proper control law $\tau_{m,d}$ is intended which compensates for system nonlinearities and trace the desired trajectory, simultaneously. For the sake of compactness the following definition is applied $n(q,\dot{q})=C(q,\dot{q})\dot{q}+g(q)$, where no collision is assumed, i.e. $\tau_{ext}=0$. Reordering (21) leads to:

$$M(q)\ddot{q}+n(q,\dot{q})+K_J(q-\theta)+D_J(\dot{q}-\dot{\theta})=0 \tag{23}$$

In order to be able to cancel the nonlinear term, u and $\alpha(\cdot)$ must always appear as $u\pm\alpha(\cdot)$ in the control law equation which also contains v, see also [22]. Since the command torque is missing in (23), we differentiate it and substitute $\ddot{\theta}$ by $B^{-1}(\tau_{m,d}K_J(q-\theta)+D_J(\dot{q}-\dot{\theta}))$ with $\tau_{m,d}$ being the control law of the closed-loop system and the desired input torque. The control law in this case is preferably defines as:

$$\tau_{m,d}=BD_J^{-1}\left(M\dddot{q}+r(q,\dot{q},\ddot{q})\right)+K_J(\theta-q)+D_J(\dot{\theta}-\dot{q})$$
$$r(q,\dot{q},\ddot{q})=(\dot{M}+D_J)\ddot{q}+\dot{n}+K_J(\dot{q}-\dot{\theta}) \tag{24}$$

where $\dddot{q}\in\mathbb{R}^n$ is the link side joint jerk and here it is the stabilizing linear feedback control, i.e. $v=\dddot{q}$ . Estimating the acceleration of the flexible joint in this case, allows one to differentiate it and apply the principles of feedback linearization. Note here that, if one neglects the system damping (i.e. $D_J\approx0$), the dynamic model equation has to be differentiated twice to be able to insert the desired torque in the formulations and the elastic joint snap $q^{(4)}$ is , as given by [23]. For rigid body manipulators however, the joint acceleration is the design control input, i.e. $v=\ddot{q}$ [24]. In order to be able to estimate the joint acceleration, let us first consider an arbitrary link $i$ of an articulated manipulator whose link side joint velocity $\dot{q}_i$ and acceleration $\ddot{q}_i$ in $JNT_i$ are unknown. Furthermore, a triaxial accelerometer on $LNK_i$ of the robot measures the Cartesian link acceleration $a_i$ in its local frame. Since the accelerometer location is fixed, the orientation of the sensor frame is always fixed with respect to the orientation of frame $i$, however, with a different origin. Due to noise and bias the accelerometer signal is preferably fused with other sensors. The standard measured quantity in the robots is the joint position $q_i$. Time derivatives of the joint position measurement alone is also prone to error due to the sensor quantization and effective noise. Measurement noise in $q_i$ is mainly because of the overall mechatronics parasites such as motor and link-side friction effects. Therefore, the signals of two sensors are preferably fused to improve the estimation accuracy and bandwidth.

The invention is explained above with reference to the aforementioned embodiments. However, it is clear that the invention is not only restricted to these embodiments, but comprises all possible embodiments within the spirit and scope of the inventive thought and the patent claims.

Brief description of the drawings:

Fig. 1    shows a robot according to a first embodiment of the invention,

Fig. 2    shows a section of the robot of Fig. 1 in more detail, and

Fig. 3    shows a section of a robot as in Fig. 1 in more detail according to another embodiment of the invention, and

Fig. 4    shows a method for determining an angular joint velocity and/or an angular joint acceleration for a robot according to a third embodiment of the invention.

Detailed description of the drawings:

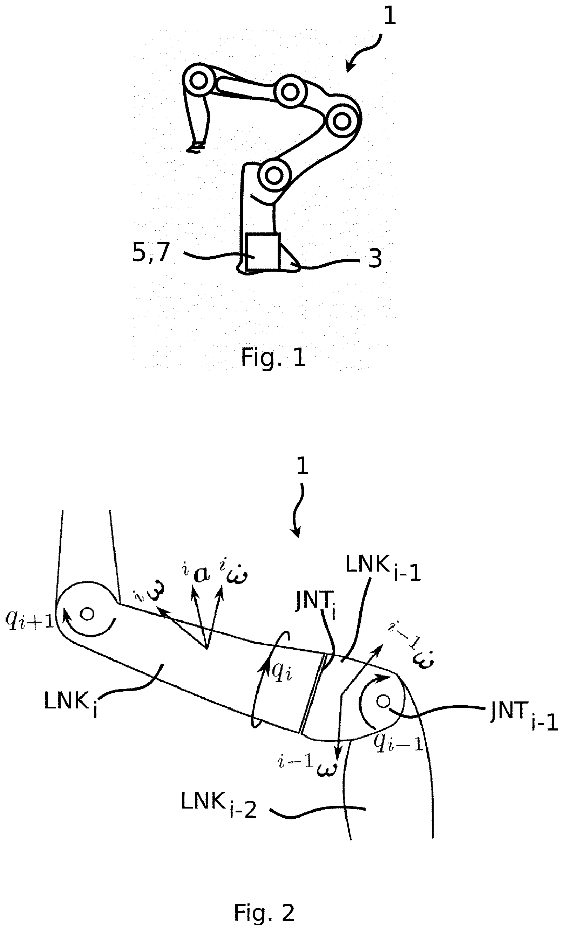

Fig. 1 shows a robot 1 with an actuated robot manipulator, a number of joints $JNT_i$ and links $LNK_i$. The robot 1, in particular the first joint $JNT_{i=1}$ is mounted on a base 3. At the base 3, the first unit 5 and the second unit 7 are housed.
Fig. 2 shows a detailed view of a section of the robot 1 shown in Fig. 1. The robot 1 comprises an actuated robot manipulator, the robot manipulator comprising a number $N$ of rigid body links $LNK_i$, wherein the links $LNK_i$ are connected via joints $JNT_i$, with $i=1,2,...,N$ and $N \geq 1$, wherein a first link $LNK_{i=1}$ is connected to a robot base 3 via a first joint $JNT_{i=1}$, wherein each of the joints $JNT_i$ comprises a joint angle measurement unit for measuring a joint angle $q_i$ and each of the links $LNK_i$ comprises a first translational acceleration sensor $S_i$ for measuring a translational acceleration $a_i$, each translational acceleration sensor $S_i$ being spaced apart from a rotation axis of joint $JNT_i$, wherein the robot 1 further comprises: A first unit 5, wherein the first unit 5 is configured to determine an angular joint velocity $\dot{q}_i$ and an angular joint acceleration $\ddot{q}_i$ of each joint $JNT_i$ by applying a first kinematic relation connecting the measured translational acceleration $a_i$ at link $LNK_i$ with a position vector $X_{S,i}$ of the translational acceleration sensor $S_i$ and an angular velocity $\omega_i$ of link $LNK_i$ and an angular acceleration $\dot{\omega}_i$ of link $LNK_i$.

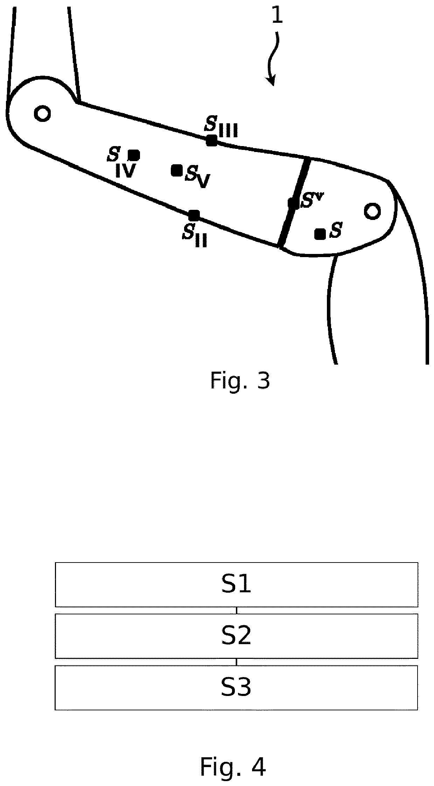

Fig. 3 shows a detailed view of a section of the robot 1 shown in Fig. 1 and shows a possible sensor arrangement, referring to all embodiments with more than two sensors per link and/or a per link and an additional virtual sensor. The embodiments are not explicitly repeated here for the sake of compactness. If the description refers to an embodiment with two sensors per link, Fig. 3 is to be read ignoring $S$, $S_{IV}$, $S_V$, and $S^V$, but with taking into account the sensor $S_{III}$ and the sensor $S_{II}$ only, for instance. If the description refers to an embodiment with an additional sensor, Fig. 3 is to be read ignoring $S_{III}$, $S_{IV}$, $S_V$, and , but with taking into account the sensor $S$ , the sensor $S_{II}$, and $S^V$ only, for instance. If a setup with four sensors per link is considered, $S$ and $S_V$ are to be ignored and $S_{II}$, $S_{III}$, $S_{IV}$, and $S_V$ are to be considered. Fig. 3 furthermore neglects any indexes for sake of compactness but the sensor nomenclature can be arbitrarily combined with applying indexes as considered throughout the claims and the description.

Fig. 4 shows a method for determining an angular joint velocity $\dot{q}_{i=i^*}$ and/or an angular joint acceleration $\ddot{q}_{i=i^*}$ for a robot 1 with an actuated robot manipulator, the robot manipulator comprising a number $N$ of rigid body links $LNK_i$, wherein the links $LNK_i$ are connected via joints $JNT_i$, with $i=1,2,...,N$ and $N \geq 1$, wherein a first link $LNK_{i=1}$ is connected to a robot base 3 via a first joint $JNT_{i=1}$, wherein each of the joints $JNT_i$ comprises a joint angle measurement unit measuring S1 a joint angle $q_i$ and each of the links $LNK_i$ comprises a first translational acceleration sensor $S_i$ measuring S2 a translational acceleration $a_i$, each translational acceleration sensor $S_i$ being spaced apart from a rotation axis of joint $JNT_i$, wherein an angular joint velocity $\dot{q}_i$ and an angular joint acceleration $\ddot{q}_i$ of each joint $JNT_i$ is determined by a first unit 5 by applying S3 a first kinematic relation connecting the measured translational acceleration $a_i$ at link $LNK_i$ with a position vector $X_{S,i}$ of the translational acceleration sensor $S_i$ and an angular velocity $\omega_i$ of link $LNK_i$ and an angular acceleration $\dot{\omega}_i$, of link $LNK_i$ .

**Claims**

1. Robot (1) with an actuated robot manipulator, the robot manipulator comprising a number $N$ of rigid body links $LNK_i$, wherein the links $LNK_i$ are connected via joints $JNT_i$, with $i=1,2,...,N$ and $N \geq 1$,
wherein a first link $LNK_{i=1}$ is connected to a robot base (3) via a first joint $JNT_{i=1}$, wherein each of the joints $JNT_i$ comprises a joint angle measurement unit for measuring a joint angle $q_i$,
wherein a first translational acceleration sensor $S_{i=i^*}$ with $i^* \in \{1,2,...,N\}$ for measuring a translational acceleration $a_{i=i^*}$ is attached to link $LNK_{i=i^*}$, the translational acceleration sensor $S_{i=i^*}$ being spaced apart from a rotation axis of the joint $JNT_{i=i^*}$ , wherein the robot (1) further comprises:
A first unit, wherein the first unit (5) is configured to determine an angular joint velocity $\dot{q}_{i=i^*}$ and/or an angular joint acceleration $\ddot{q}_{i=i^*}$ of joint $JNT_{i=i^*}$ by applying a first kinematic relation connecting the measured translational acceleration $a_{i=i^*}$ at link $LNK_{i=i^*}$ with a position vector $X_{S,i=i^*}$ of the translational acceleration sensor $S_{i=i^*}$ and an angular velocity $\omega_{i=i^*}$ of link $LNK_{i=i^*}$ and an angular acceleration $\dot{\omega}_{i=i^*}$ of link $LNK_{i=i^*}$.

2. Robot (1) according to claim 1,
wherein each of the links $LNK_{i<i^*}$ comprises a first translational acceleration sensor $S_{i<i^*}$ for measuring a translational acceleration $a_{i<i^*}$, each translational acceleration sensor $S_{i<i^*}$ being spaced apart from the respective rotation axis of each joint $JNT_{i<i^*}$, wherein the first unit (5) is configured to determine the angular joint velocity $\dot{q}_{i<i^*}$ and/or the angular joint acceleration $\ddot{q}_{i<i^*}$ of each of the joints $JNT_{i<i^*}$ by applying the first kinematic relation reiterated, beginning with $JNT_{i=1}$ up to $JNT_{i=i^*}$.

3. Robot (1) with an actuated robot manipulator, the robot manipulator comprising a number $N$ of rigid body links $LNK_i$, wherein the links $LNK_i$ are connected via joints $JNT_i$, with $i=1,2,...,N$ and $N \geq 1$,
wherein a first link $LNK_{i=1}$ is connected to a robot base (3) via a first joint $JNT_{i=1}$, wherein each of the joints $JNT_i$ comprises a joint angle measurement unit for measuring a joint angle $q_i$ and each of the links $LNK_i$ comprises a first translational acceleration sensor $S_i$ for measuring a translational acceleration $a_i$, each translational acceleration sensor $S_i$ being spaced apart from a rotation axis of joint $JNT_i$, wherein the robot (1) further comprises:
A first unit (5), wherein the first unit (5) is configured to determine an angular joint velocity $\dot{q}_i$ and an angular joint

acceleration $\ddot{q}_i$ of each joint $JNT_i$ by applying a first kinematic relation connecting the measured translational acceleration $a_i$ at link $LNK_i$ with a position vector $X_{S,i}$ of the translational acceleration sensor $S_i$ and an angular velocity $\omega_i$ of link $LNK_i$ and an angular acceleration $\dot{\omega}_i$ of link $LNK_i$.

4. Robot (1) according to one of the claims 2 and 3,
   wherein the first unit (5) is configured to determine $\omega_i$ and $\dot{\omega}_i$ by solving the first kinematic relation and to determine $\dot{q}_i$ from $\omega_i$ and $\omega_{i-1}$ for $i=2,...,N$ , and to determine $\ddot{q}_i$ from $\dot{\omega}_i$ and $\dot{\omega}_{i-1}$ for $i=2,...,N$.

5. Robot (1) according to one of the preceding claims,
   wherein the first unit (5) is configured to determine the position vector $X_{S,i}$ based on all $q_{i=1}$ to $q_i$ and based on a geometric model of the robot manipulator.

6. Robot (1) according to one of the claims 1 to 5,
   wherein the first unit (5) is configured to determine the absolute value of angular joint velocity as $|\dot{q}_i|$ and to determine a sign for $|\dot{q}_i|$ to obtain an angular joint velocity $\dot{q}_i$, by integrating $\ddot{q}_i$ and by determining the difference of the integrated $\ddot{q}_i$ to a) with $|\dot{q}_i|$ and to b) with - $|\dot{q}_i|$, and by choosing the sign according to the lowest difference out of a) and b).

7. Robot (1) according to one of the claims 1 to 5,
   wherein the first unit (5) is configured to determine the absolute value of angular joint velocity as $|\dot{q}_i|$ and to determine a sign for $|\dot{q}_i|$ to obtain an angular joint velocity $\dot{q}_i$, by determining the derivative of the measured joint angle $q_i$ and by adopting the sign of the derivative of the measured joint angle $q_i$ the absolute value of angular joint velocity as $|\dot{q}_i|$.

8. Robot (1) according to one of the preceding claims,
   wherein at least one second translational acceleration sensor $S_{II}$ for measuring a translational acceleration $a_{II,i}$ is attached to one or more of the links $LNK_i$, wherein the first unit (5) is configured to eliminate a linear acceleration affecting the robot base (3) from the first kinematic relation by subtracting the measured acceleration $a_{II,i}$ of the at least one second translational acceleration sensor $S_{II}$ from the measured translational acceleration $a_i$ of a first translational acceleration sensor $S_i$ located on the same of the links $LNK_i$ which the at least one second translational acceleration sensor $S_{II}$ is attached to.

9. Robot (1) according to one of the preceding claims,
   wherein the first unit (5) is configured to eliminate a gravity influence from the measured translational acceleration $a_i$ of a first translational acceleration sensor $S_i$ by subtracting a gravity vector, wherein the direction of the gravity vector relative to an orientation of the first translational acceleration sensor $S_i$ is determined by joint all angles from $q_{i=1}$ up to the last one of $q_i$ of $LNK_i$ to which the translational acceleration $a_i$ is attached to.

10. Robot (1) according to one of the preceding claims,
    wherein the first unit (5) is configured to eliminate a linear acceleration affecting the robot manipulator by applying a second kinematic relation between a virtual sensor $S^V$ located on each rotation axis of the at least one of the joints $JNT_i$ and a first translational acceleration sensor $S_{i-1}$ located on corresponding link $LNK_{i-1}$ , for $i \in \{2,...,N\}$, wherein the second kinematic relation connects the virtually measured translational acceleration $a_{i-1,v}$ at the at least one of the joints $JNT_i$ with the physically measured translational acceleration at the corresponding link $LNK_{i-1}$ and a relative position vector ($X^V$-$X$) between the virtual sensor $S^V$ and the first translational acceleration sensor $S_i$ and an angular velocity $\omega_{i-1}$ of the corresponding link $LNK_{i-1}$ and an angular acceleration $\dot{\omega}_{i-1}$ of the corresponding link $LNK_{i-1}$, for $i \in \{2,...,N\}$.

11. Robot (1) according to one of the preceding claims,
    wherein four of the first translational acceleration sensors $S_i$ for measuring a translational acceleration $a_i$ are attached to each of the links $LNK_i$ .

12. Robot (1) according to one of the preceding claims,
    wherein the robot (1) further comprises:
    A second unit (7), wherein the second unit (7) is configured to determine and to provide filtered values $\hat{q}_i$ of the joint angle $q_i$ and/or filtered values $\hat{\dot{q}}_i$ of angular joint velocity $\dot{q}_i$ and/or filtered values $\hat{\ddot{q}}_i$ of angular joint acceleration $\ddot{q}_i$ by applying a filter model to the joint angle $q_i$ and the angular joint velocity $\dot{q}_i$ and angular joint acceleration $\ddot{q}_i$.

13. Method for determining an angular joint velocity $\dot{q}_{i=i^*}$ and/or an angular joint acceleration $\ddot{q}_{i=i^*}$ for a robot (1) with an actuated robot manipulator, the robot manipulator comprising a number N of rigid body links $LNK_i$, wherein the links $LNK_i$ are connected via the joints $JNT_i$, with $i=1,2,...,N$ and $N \geq 1$, wherein a first link $LNK_{i=1}$ is connected to a robot base (3) via a first joint $JNT_{i=1}$, wherein each of the joints $JNT_i$ comprises a joint angle measurement unit measuring (S1) a joint angle $q_i$,
wherein a first translational acceleration sensor $S_{i=i^*}$ with $i^* \in \{1,2,...,N\}$ for measuring (S2) a translational acceleration $a_{i=i^*}$ is attached to link $LNK_{i=i^*}$, the translational acceleration sensor $S_{i=i^*}$ being spaced apart from a rotation axis of the joint $JNT_{i=i^*}$, wherein an angular joint velocity $\dot{q}_{i=i^*}$ and/or an angular joint acceleration $\ddot{q}_{i=i^*}$ of joint $JNT_{i=i^*}$ is determined by a first unit (5) by applying (S3) a first kinematic relation connecting the measured translational acceleration $a_{i=i^*}$ at link $LNK_{i=i^*}$ with a position vector $X_{S,i=i^*}$ of the translational acceleration sensor $S_{i=i^*}$ and an angular velocity $\omega_{i=i^*}$ of link $LNK_{i=i^*}$ and an angular acceleration $\dot{\omega}_{i=i^*}$ of link $LNK_{i=i^*}$.

14. Method for determining an angular joint velocity $\dot{q}_{i=i^*}$ and/or an angular joint acceleration $\ddot{q}_{i=i^*}$ for a robot (1) with an actuated robot manipulator, the robot manipulator comprising a number N of rigid body links $LNK_i$, wherein the links $LNK_i$ are connected via joints $JNT_i$, with $i=1,2,...,N$ and $N \geq 1$, wherein a first link $LNK_{i=1}$ is connected to a robot base (3) via a first joint $JNT_{i=1}$, wherein each of the joints $JNT_i$ comprises a joint angle measurement unit measuring (S1) a joint angle $q_i$ and each of the links $LNK_i$ comprises a first translational acceleration sensor $S_i$ measuring (S2) a translational acceleration $a_i$, each translational acceleration sensor $S_i$ being spaced apart from a rotation axis of joint $JNT_i$, wherein an angular joint velocity $\dot{q}_i$ and an angular joint acceleration $\ddot{q}_i$ of each joint $JNT_i$ is determined by a first unit (5) by applying (S3) a first kinematic relation connecting the measured translational acceleration $a_i$ at link $LNK_i$ with a position vector $X_{S,i}$ of the translational acceleration sensor $S_i$ and an angular velocity $\omega_i$ of link $LNK_i$ and an angular acceleration $\dot{\omega}_i$ of link $LNK_i$.

15. Method according to one of the claims 13 and 14,
wherein $\omega_i$ and $\dot{\omega}_i$ are determined by the first unit (5) by solving the first kinematic relation and to determine $\dot{q}_i$ from $\omega_i$ and $\omega_{i-1}$ for $i=2,...,N$, and to determine $\ddot{q}_i$ from $\dot{\omega}_i$ and $\dot{\omega}_{i-1}$ for $i=2,...,N$.

Fig. 1

Fig. 2

Fig. 3

Fig. 4

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | LAURENCE MCLEAN ET AL: "A Robotic Joint Sensor", AUSTRALASIAN CONFERENCE ON ROBOTICS AND AUTOMATION, 2 December 2015 (2015-12-02), XP055641111, Canberra,ACT,Australia ISBN: 978-0-9807404-6-2 * sections 1-4; figures 1,3 * | 1-15 | INV. B25J9/16 |
| A | SUNGSU PARK ET AL: "Angular Rate Estimation Using a Distributed Set of Accelerometers", SENSORS, vol. 11, no. 11, 2 November 2011 (2011-11-02), pages 10444-10457, XP055642927, DOI: 10.3390/s111110444 * page 10446 - page 10451 * | 6,7,9,10 | |
| A,D | PEI-CHUN LIN ET AL: "Sensor data fusion for body state estimation in a hexapod robot with dynamical gaits", IEEE TRANSACTIONS ON ROBOTICS., vol. 22, no. 5, 1 October 2006 (2006-10-01), pages 932-943, XP055642930, US ISSN: 1552-3098, DOI: 10.1109/TRO.2006.878954 * page 935 - page 942 * | 6,7,10 | TECHNICAL FIELDS SEARCHED (IPC) B25J |
| A | EP 2 703 130 A2 (SEIKO EPSON CORP [JP]) 5 March 2014 (2014-03-05) * the whole document * | 1,13 | |

The present search report has been drawn up for all claims

| Place of search | Date of completion of the search | Examiner |
|---|---|---|
| The Hague | 22 November 2019 | De Santis, Agostino |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 3 736 090 A1**

## ANNEX TO THE EUROPEAN SEARCH REPORT
## ON EUROPEAN PATENT APPLICATION NO.

EP 19 17 3853

22-11-2019

| Patent document cited in search report | | Publication date | Patent family member(s) | | Publication date |
|---|---|---|---|---|---|
| EP 2703130 | A2 | 05-03-2014 | CN | 103659798 A | 26-03-2014 |
| | | | EP | 2703130 A2 | 05-03-2014 |
| | | | JP | 6332899 B2 | 30-05-2018 |
| | | | JP | 2014046402 A | 17-03-2014 |
| | | | US | 2014060233 A1 | 06-03-2014 |
| | | | US | 2016101521 A1 | 14-04-2016 |
| | | | US | 2018065251 A1 | 08-03-2018 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Repetitive and adaptive control of robot manipulators with velocity estimation. **K. KANEKO ; R. HOROW-ITZ.** IEEE Transactions on Robotics and Automation. April 1997, vol. 13, 204-217
- **G. LIU ; A. GOLDENBERG ; Y. ZHANG.** Precise slow motion control of a direct-drive robot arm with velocity estimation and friction compensation. *Mechatronics,* September 2004, vol. 14 (7), 821-834
- **B. SICILIANO ; O. KHATIB.** Springer Handbook of Robotics. Springer- Verlag Berlin Heidelberg: Springer, 2008
- Robot control without velocity measurements: new theory and experimental results. **M. A. ARTEAGA ; R. KELLY.** IEEE Transactions on Robotics and Automation. April 2004, vol. 20, 297-308
- **N. DUNG ; V. M. H. ANG ; T. M. LIM ; S. Y. LIM.** Multi-rate operational space control of compliant motion in robotic manipulators. *2009 IEEE International Conference on Systems, Man and Cybernetics,* October 2009, 3175-3180
- **S. HADDADIN ; A. DE LUCA ; A. ALBU-SCHAF-FER.** Robot collisions: A survey on detection, isolation, and identification. *IEEE Transactions on Robotics,* 2017, vol. 33 (6), 1292-1312
- **J. KIRCHHOFF ; O. VON STRYK.** Velocity estimation for ultra lightweight tendon driven series elastic robots. *IEEE Robotics and Automation Letters,* 2017, vol. PP (99), 1-1
- **M. GERAVAND ; F. FLACCO ; A. DE LUCA.** Human-robot physical interaction and collaboration using an industrial robot with a closed control architecture. *2013 IEEE International Conference on Robotics and Automation,* May 2013, 4000-4007
- **Y. X. SU ; C. H. ZHENG ; D. SUN ; B. Y. DUAN.** A simple nonlinear velocity estimator for high-performance motion control. *IEEE Transactions on Industrial Electronics,* August 2005, vol. 52 (4), 1161-1169
- PD control of robot with velocity estimation and uncertainties compensation. **W. YU ; X. LI.** Decision and Control, 2001. Proceedings of the 40th IEEE Conference on. IEEE, 2001, vol. 2, 1162-1167
- **S. MORIMOTO ; K. KAWAMOTO ; M. SANADA ; Y. TAKEDA.** Sensorless control strategy for salient-pole PMSM based on extended EMF in rotating reference frame. *IEEE Transactions on Industry Applications,* July 2002, vol. 38 (4), 1054-1061

- **A. DE LUCA ; R. MATTONE.** Sensorless robot collision detection and hybrid force/motion control. *Proceedings of the 2005 IEEE International Conference on Robotics and Automation,* April 2005, 999-1004
- **P.-C. LIN ; H. KOMSUOGLU ; D. E. KODITSCHEK.** Sensor data fusion for body state estimation in a hexapod robot with dynamical gaits. *IEEE Transactions on Robotics,* October 2006, vol. 22 (5), 932-943
- **L. MCLEAN ; L. CHEN ; W. ROBERTSON.** A robotic joint sensor. *Australasian Conference on Robotics and Automation,* 2015
- **R. JASSEMI-ZARGANI ; D. NECSULESCU.** Extended Kalman filter sensor fusion signals of nonlinear dynamic systems. *DEFENCE RESEARCH ESTABLISHMENT OTTAWA (ONTARIO), Tech. Rep.,* 2001
- **J. H. CHEN ; S. LEE ; D. DEBRA.** Gyroscope free strapdown inertial measurement unit by six linear accelerometers. *Journal of Guidance, Control, and Dynamics,* April 1994, vol. 17 (2), 286-290
- **K. PARSA ; J. ANGELES ; A. K. MISRA.** Rigid-body pose and twist estimation using an accelerometer array. *Archive of Applied Mechanics,* December 2004, vol. 74 (3), 223-236, https://doi.org/10.1007/s00419-004-0345-6
- **B. MUNOZ-BARRON ; J. R. RIVERA-GUILLEN ; R. A. OSORNIO-RIOS ; R. J. ROMERO-TRONCOSO.** Sensor fusion for joint kinematic estimation in serial robots using encoder, accelerometer and gyroscope. *Journal of Intelligent & Robotic Systems,* June 2015, vol. 78 (3), 529-540
- **W. SHANG ; S. CONG.** Motion control of parallel manipulators using acceleration feedback. *IEEE Transactions on Control Systems Technology,* January 2014, vol. 22 (1), 314-321
- **J. VORNDAMME ; M. SCHAPPLER ; S. HADDA-DIN.** Collision detection, isolation and identification for humanoids. *2017 IEEE International Conference on Robotics and Automation (ICRA),* May 2017, 4754-4761
- **M. W. SPONG.** Modeling and control of elastic joint robots. *Journal of dynamic systems, measurement, and control,* 1987, vol. 109 (4), 310-318
- **H. K. KHALIL.** *Noninear systems,* 1996, vol. 2 (5

- **A. DE LUCA.** Decoupling and feedback linearization of robots with mixed rigid/elastic joints. *International Journal of Robust and Non- linear Control: IFAC-Affiliated Journal,* 1998, vol. 8 (11), 965-977
- **M. W. SPONG ; S. HUTCHINSON ; M. VIDYASA-GAR et al.** Robot modeling and control. Wiley, 2006, vol. 3
- **B. N. ALSUWAIDAN ; J. L. CRASSIDIS ; Y. CHENG.** Generalized multiple-model adaptive estimation using an autocorrelation ap- proach. *IEEE Transactions on Aerospace and Electronic Systems,* July 2011, vol. 47 (3), 2138-2152
- **E. MAZOR ; A. AVERBUCH ; Y. BAR-SHALOM ; J. DAYAN.** Interacting multiple model methods in target tracking: a survey. *IEEE Transactions on Aerospace and Electronic Systems,* January 1998, vol. 34 (1), 103-123
- **Y. ZHANG ; X. R. LI.** Detection and diagnosis of sensor and actuator failures using IMM estimator. *IEEE Transactions on Aerospace and Electronic Systems,* October 1998, vol. 34 (4), 1293-1313
- **J. P. HESPANHA ; A. S. MORSE.** Stability of switched systems with average dwell-time. *Proceedings of the 38th IEEE Conference on Decision and Control (Cat. No.99CH36304),* December 1999, vol. 3, 2655-2660
- **SMALL.** Low Power, 3-Axis ±16g Accelerometer. *Analog Devices,* 2009
- **R. E. KALMAN.** A new approach to linear filtering and prediction problems. *Transactions of the ASME-Journal of Basic Engineering,* March 1960, vol. 82 (D), 35-45
- **S. J. JULIER ; J. K. UHLMANN.** A new extension of the Kalman filter to nonlinear systems. *Int. symp. aerospace/defense sensing, simul. and controls,* 1997, vol. 3 (26), 182-193
- **R. KELLY.** A simple set-point robot controller by using only position measurements. *IFAC Proceedings,* 1993, vol. 26 (2), 527-530
- **K.-J. PARK.** Fourier-based optimal excitation trajectories for the dynamic identification of robots. *Robotica,* 2006, vol. 24 (5), 625-633
- **F. GUSTAFSSON.** Determining the initial states in forward-backward filtering. *IEEE Transactions on signal processing,* 1996, vol. 44 (4), 988-992